# FASCICULE DE BREVET EUROPEEN

(11) **EP 2 017 124 B1**
(45) Date de publication et mention de la délivrance du brevet: **04.09.2019**
(21) Numéro de dépôt: 08160225.2
(22) Date de dépôt: 11.07.2008
(51) Int. Cl.: B60Q 1/076, B60Q 1/068

(54) **Correcteur d'éclairage pour dispositif d'éclairage et/ou de signalisation de véhicule automobile**
Beleuchtungsregler für Beleuchtungs- und/oder Signalisierungsvorrichtung für Kraftfahrzeuge
Lighting corrector for a lighting and/or signalling device for an automobile

(30) Priorité: 20.07.2007 FR 0705298
(43) Date de publication de la demande: 21.01.2009
(73) Titulaire: AML Systems, 75008 Paris (FR)
(72) Inventeur: Toulisse, Ludovic, 93700, Drancy (FR)
(74) Mandataire: Gevers & Orès

(56) Documents cités:
- EP-A- 0 692 405
- EP-A- 0 956 998
- EP-A- 1 527 949
- WO-A-90/07440
- FR-A- 2 804 744
- JP-A- 11 028 972
- US-A1- 2004 240 222

## Description

L'invention concerne un correcteur d'éclairage pour projecteur de lumière de véhicule automobile. Ce correcteur est monté à l'intérieur du projecteur et fixé, par un élément à baïonnette, à l'extérieur dudit projecteur. L'invention concerne également un dispositif de projection de lumière comportant un tel correcteur.

L'invention trouve des applications dans le domaine de l'éclairage automobile et, en particulier, dans le domaine du contrôle de l'éclairage des véhicules en fonction de l'assiette du véhicule.

Dans le domaine de la construction automobile et, en particulier, de l'éclairage automobile, il peut être important d'adapter l'angle d'éclairage des projecteurs du véhicule en fonction de l'assiette du véhicule.

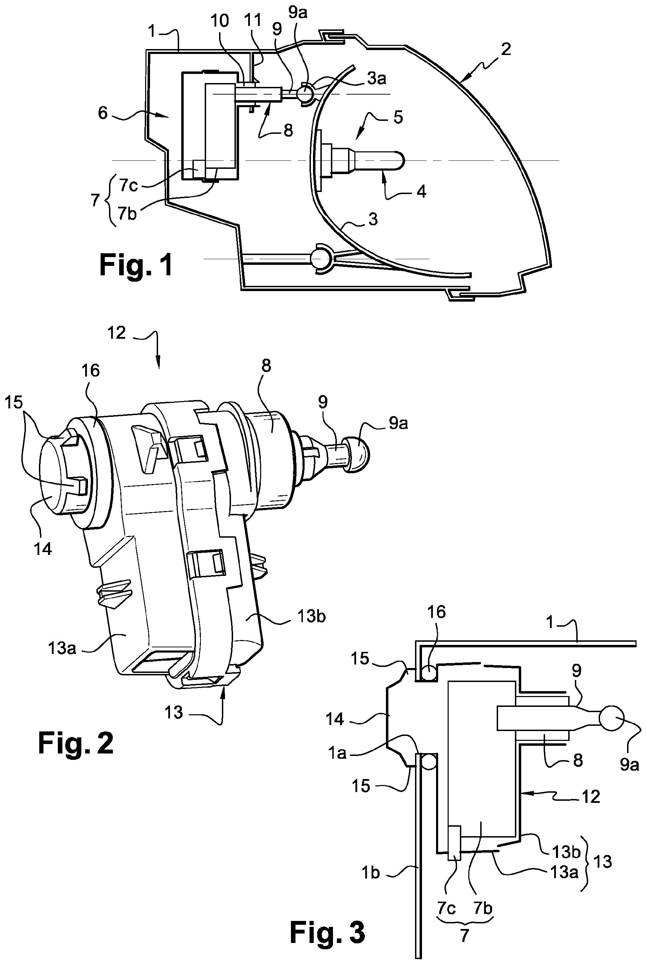

Un exemple de projecteur d'éclairage selon l'art antérieur est représenté sur la figure 1. D'une façon générale, un projecteur de véhicule automobile, comporte un boîtier 1 fermé par une glace de protection 2. Ce boîtier de projecteur sera appelé par la suite boîtier externe. Une unité d'éclairage 5 est montée à l'intérieur du boîtier externe 1, face à la glace de protection 2, pour émettre un faisceau lumineux dirigé vers la scène de route située à l'avant du véhicule. Cette unité d'éclairage comporte une source lumineuse 4 installée devant un réflecteur 3. Le réflecteur 3 a pour rôle de diriger le faisceau émis par la source lumineuse 4.

Aussi, pour orienter le faisceau lumineux et ainsi régler la hauteur dudit faisceau, il est connu de modifier la position du réflecteur 3 à l'intérieur de l'unité d'éclairage 5. La position du réflecteur 3 est modifiée généralement au moyen d'un correcteur d'éclairage 6. Le correcteur d'éclairage 6 est un dispositif électromécanique apte à entraîner le pivotement du réflecteur 3.

Le correcteur d'éclairage 6 comporte un module électrique 7. Ce module électrique est généralement équipé d'un moteur 7b et d'une carte électronique 7c. La rotation du moteur entraîne la translation de la tige longitudinale 9. La carte électronique est apte à recevoir des données relatives à l'assiette du véhicule et à commander le fonctionnement du moteur.

Le correcteur d'éclairage 6 comporte en outre un ensemble mécanique 8 placé au moins partiellement autour de la tige 9 pour assurer une transformation du mouvement de rotation de la tige en un mouvement au moins partiellement translatif. Plus précisément, l'ensemble mécanique 8 transforme le mouvement rotatif de la tige 9 en un mouvement hélicoïdal. Ce mouvement hélicoïdal comporte une composante en translation. Cette composante en translation assure un déplacement longitudinal de la tige 9, entraînant un pivotement du réflecteur 3.

En effet, la tige 9 comporte une extrémité en forme de sphère 9a. Le déplacement de la tige 9 entraîne le déplacement de la sphère 9a dans une capsule 3a fixée sur le réflecteur 3, par exemple dans la partie supérieure du réflecteur. Ce déplacement de la sphère 9a entraîne le pivotement du réflecteur 3

Il existe actuellement plusieurs types de correcteurs d'éclairage. Certains correcteurs sont placés à l'extérieur du boîtier du projecteur. Ces correcteurs sont appelés des correcteurs externes. Un correcteur externe est fixé sur la face extérieure du boîtier externe du projecteur et comporte un élément traversant ledit boîtier externe de façon à reprendre la tige longitudinale. Ces correcteurs externes ont l'inconvénient de nécessiter une double étanchéité. En effet, le correcteur lui-même doit être étanche car il est susceptible de recevoir des projections d'eau ou de subir des infiltrations d'humidité. De plus, une étanchéité doit être installée autour de l'ouverture permettant le passage de l'élément traversant pour éviter toute infiltration d'humidité dans le projecteur.

Certains correcteurs d'éclairage sont placés à l'intérieur du boîtier du projecteur. C'est le cas du correcteur de la figure 1. Ces correcteurs, appelés correcteurs internes, ont l'avantage de ne pas nécessiter d'étanchéité. En effet, le correcteur lui-même n'a pas besoin d'être étanche puisqu'il est placé à l'intérieur du boîtier qui lui-même est étanche.

Un tel correcteur interne doit être fixé à l'intérieur du boîtier externe. Plusieurs techniques de fixation du correcteur dans le boîtier externe sont connues. Par exemple, il est possible de fixer par vis l'arrière du correcteur sur le fond du boîtier du projecteur. Des canons de vissage réalisés dans la paroi du boîtier externe du projecteur et dans le boîtier du correcteur permettent d'assembler, par une vis, le correcteur interne sur l'arrière du boîtier de projecteur. Un tel système de fixation présente l'inconvénient de nécessiter des éléments supplémentaires, à savoir les vis, ainsi que du temps et des moyens supplémentaires pour la mise en place de ces éléments. Un exemple de correcteur de ce type est décrit dans le document WO9007440.

Une autre technique de fixation consiste à fixer le correcteur interne au moyen d'un élément à baïonnette. Une telle technique de fixation est représentée sur la figure 1. Avec cette technique, le correcteur interne 6 est fixé à l'intérieur du boîtier externe 1 par sa face avant. Pour cela, cette face avant du boîtier du correcteur est équipée d'un élément à baïonnette 10 qui se fixe dans une paroi supplémentaire 11 aménagée dans le boîtier externe 1. L'élément à baïonnette 10 est généralement placé autour de la tige longitudinale 9. Il constitue l'extérieur de l'ensemble mécanique 8 du correcteur. La paroi supplémentaire 11 du boîtier externe 1 est une zone proéminente à l'intérieur dudit boîtier externe, qui comporte une ouverture adaptée pour recevoir l'élément à baïonnette 10. Dans l'exemple de la figure 1, la paroi supplémentaire 11 forme une proéminence sur la face supérieure du boîtier externe, qui s'étend vers la face inférieure dudit boîtier externe. Elle peut aussi former une zone proéminente partant de la face inférieure du boîtier externe ; elle peut aussi traverser totalement l'intérieur du boîtier externe rejoignant la face supérieure et la face inférieure.

Dans une telle technique de fixation du correcteur interne par baïonnettage, il est nécessaire de réaliser une ouverture sur l'arrière du boîtier externe pour introduire le correcteur interne dans ledit boîtier externe. Cette ouverture doit être de taille suffisante pour permettre, d'une part, l'introduction du correcteur interne dans le boîtier externe et, d'autre part, le passage de la main de l'opérateur pour fixer le correcteur interne sur la paroi supplémentaire. De plus, une fixation par baïonnettage nécessite, de la part de l'opérateur, à la fois un mouvement de translation et un mouvement de rotation, ce qui induit un volume encore plus important pour le passage de la main de l'opérateur. Une telle ouverture sur l'arrière du boîtier externe nécessite la réalisation d'un moyen de fermeture, par exemple, une porte ou un capot arrière, muni d'une étanchéité. Un autre type de montage par baïonnettage est décrit dans EP1527949.

On comprend alors que la fabrication d'un tel boîtier externe à paroi supplémentaire et à capot de fermeture est relativement complexe et coûteuse.

L'invention a justement pour but de remédier aux inconvénients des techniques exposées précédemment. A cette fin, l'invention propose un correcteur d'éclairage interne dans lequel la fixation dudit correcteur est réalisée au moyen d'un élément de fixation, tel qu'un élément de fixation permettant une fixation dudit correcteur par au moins un déplacement en rotation dudit correcteur, tel qu'un élément à baïonnette, ledit élément de fixation étant situé à l'arrière du correcteur. Le correcteur interne est ainsi fixé dans la paroi arrière du boîtier externe du dispositif d'éclairage et/ou de signalisation, le boîtier du correcteur étant monté à l'intérieur du boîtier externe et l'élément à baïonnette étant situé en extérieur dudit boîtier externe. Le correcteur selon l'invention permet également l'utilisation d'éléments de fixation avec lesquels il est nécessaire d'imprimer un mouvement de rotation au correcteur lui-même, lors de son montage au boîtier. Dans le cas d'un élément à baïonnette, classiquement le montage se décompose en un mouvement de translation, puis un mouvement de rotation.

Dans la présente demande, le boîtier du dispositif d'éclairage et/ou de signalisation sera appelé boîtier externe. Le boîtier du correcteur d'éclairage interne sera appelé boîtier de correcteur ou boîtier de correcteur interne. Par correcteur d'éclairage interne, on entend un correcteur situé à l'intérieur d'un dispositif d'éclairage et/ou de signalisation et permettant de corriger l'éclairage de ce dernier.

Une telle fixation permet au correcteur d'être installé à l'intérieur du boîtier externe sans nécessiter de capot à l'arrière du boîtier externe. Elle permet également de réaliser un boîtier de dispositif d'éclairage et/ou de signalisation par moulage simple, sans paroi supplémentaire.

De façon plus précise, l'invention concerne un correcteur d'éclairage interne pour dispositif d'éclairage et/ou de signalisation de véhicule automobile, comportant un système de réglage manuel et un boîtier de correcteur comprenant :
- une tige longitudinale ayant une première extrémité, externe au boîtier de correcteur, agencée sur une face avant dudit boîtier de correcteur,
- un module électromécanique apte à déplacer la tige ledit correcteur comportant un élément de fixation agencé sur une face arrière du boîtier de correcteur, ledit correcteur comporte un élément de fixation agencé sur une face arrière du boîtier de correcteur, ledit élément de fixation étant un élément à baïonnette destiné à être situé à l'extérieur du boîtier externe dudit dispositif d'éclairage et/ou de signalisation, ledit élément de fixation comportant une paroi cylindrique équipée, sur sa face externe, d'au moins deux ergots de blocage, ledit élément de fixation intégrant une roue dentée du système de réglage manuel reliée mécaniquement à la tige longitudinale afin d'entraîner ladite tige en rotation.

Le correcteur interne de l'invention peut comporter une ou plusieurs des caractéristiques suivantes :
- la roue dentée est clippée dans l'élément de fixation.
- l'élément de fixation comporte une paroi cylindrique munie d'au moins un orifice d'accès à la roue dentée.
- l'élément de fixation a une forme de bague dont une ouverture centrale constitue un accès à la roue dentée.
- ledit dispositif électromécanique est apte à déplacer la tige longitudinale au moins en translation.

L'invention concerne également un dispositif d'éclairage et/ou de signalisation pour véhicule automobile comportant :
- un boîtier externe fermé par une glace de protection,
- une unité d'éclairage, agencée à l'intérieur du boîtier externe, face à la glace de protection, pour produire un faisceau d'éclairage, et
- un correcteur d'éclairage tel que décrit précédemment, situé à l'intérieur du boîtier externe et apte à faire pivoter l'unité d'éclairage pour modifier l'orientation du faisceau d'éclairage.

Ce dispositif d'éclairage et/ou de signalisation peut comporter une ou plusieurs des caractéristiques suivantes :
- l'élément de fixation est monté à l'extérieur du boîtier externe du dispositif d'éclairage et/ou de signalisation.
- le boîtier externe du dispositif d'éclairage et/ou de signalisation comporte, sur une face opposée à la glace de protection, une ouverture de forme adaptée à la forme de l'élément de fixation, ledit élément de fixation étant monté au travers de cette ouverture.
- il comporte un joint d'étanchéité placé entre le boîtier de correcteur et le boîtier externe du dispositif d'éclairage et/ou de signalisation, autour de l'ouverture dudit boîtier externe.

L'invention concerne également un véhicule automobile équipé du dispositif de projection de lumière décrit précédemment.

L'invention sera mieux comprise à la lecture de la description qui suit et à l'examen des figures qui l'accompagnent, présentées à titre indicatif et nullement limitatif de l'invention.
La figure 1, déjà décrite, représente un exemple de projecteur équipé d'un correcteur d'éclairage interne selon l'art antérieur.
La figure 2 représente un exemple de correcteur interne.
La figure 3 représente une vue schématique, en coupe, du correcteur interne de la figure 2, monté dans un boîtier de projecteur.
La figure 4 représente un correcteur interne selon l'invention.
La figure 5 représente une vue schématique, en coupe, du correcteur interne de la figure 4, monté dans un boîtier de projecteur.
La figure 6 représente une vue en perspective de l'élément de fixation à baïonnette du second mode de réalisation de l'invention.

Sur les figures 2 et 3, on a représenté un exemple du correcteur d'éclairage de l'invention. Ce correcteur est un correcteur interne 12, destiné à être installé à l'intérieur d'un boîtier de projecteur 1 de véhicule, ou boîtier externe. Ce correcteur interne 12 comporte un boîtier 13, appelé boîtier de correcteur, réalisé à partir d'un capot arrière 13a et d'un capot avant 13b, emboîtés l'un dans l'autre. Le capot avant 13b, qui constitue en partie la face avant du correcteur, est dirigé vers l'avant du projecteur, c'est-à-dire vers la glace de protection du projecteur. Le capot arrière 13a est dirigé vers la face arrière du boîtier externe 1.

Le correcteur interne 12 comporte un module électrique 7. Ce module électrique 7 peut être identique à celui de l'art antérieur décrit précédemment. Le module électrique 7 comporte un moteur 7b et une carte électronique 7c. Le moteur électrique 7b entraîne, dans un mouvement de rotation, la tige longitudinale 9. Cette tige longitudinale 9, montée sur la face avant du boîtier de correcteur, est terminée par la sphère 9a. Un ensemble mécanique 8, agencé partiellement autour de la tige 9, modifie le mouvement de rotation de la tige en un mouvement hélicoïdal.

Dans l'invention, le correcteur interne 12 est fixé par sa face arrière sur le boîtier externe 1. L'ensemble mécanique 8 peut ainsi être intégré complètement dans le capot avant 13b du boîtier du correcteur 12.

Le capot arrière 13a du correcteur interne est équipé d'un élément 14 de fixation. Cet élément de fixation 14 est agencé sur la face arrière du boîtier de correcteur 13 de façon à être introduit dans un orifice 1a de la paroi arrière 1b du boîtier externe 1.

Selon l'invention, l'élément de fixation 14 est un élément à baïonnette. Cet élément 14 a une paroi cylindrique équipée d'au moins deux ergots latéraux 15. Ces ergots 15 assurent le blocage du correcteur sur la paroi arrière 1b du boîtier externe. L'élément à baïonnette 14 est destiné à être introduit dans un orifice 1a de forme adaptée puis tourné, par rapport à cet orifice, pour être bloqué contre la paroi 1b contenant cet orifice. Dans l'invention, l'orifice a une forme adaptée pour recevoir l'élément à baïonnette 14, c'est-à-dire qu'il a une forme sensiblement ronde équipée d'encoches permettant le passage des ergots 15 de l'élément à baïonnette 14. Avec ce mode de réalisation, le correcteur 12 est fixé sur la paroi 1b du boîtier externe par baïonnettage, c'est-à-dire par un mouvement dit « poussé - tourné ».

Cette fixation par baïonnette a l'avantage de présenter une bonne tenue axiale car, une fois l'élément à baïonnette engagé dans l'orifice, les ergots forment des surfaces de contact qui offrent une bonne tenue à l'arrachement.

Dans un mode de réalisation de l'invention, les ergots 15 constituent un moyen de détrompage pour s'assurer que le correcteur 12 est placé correctement et qu'il sera donc fixé correctement à l'intérieur du boîtier externe 1.

Le correcteur 12 de l'invention est donc un correcteur interne puisqu'il est placé à l'intérieur du boîtier du projecteur 1, mais son élément 14 de fixation à baïonnette est externe audit boîtier de projecteur. Aussi, pour éviter toute infiltration d'humidité dans le boîtier de projecteur 1, un joint 16 est préférentiellement placé autour de l'élément 14 à baïonnette. De préférence, le joint 16 est placé à l'intérieur du boîtier de projecteur, entre le capot arrière 13a du correcteur et la paroi arrière 1b du boîtier 1 du projecteur. Ainsi, les ergots 15 de l'élément 14 à baïonnette forment des surfaces d'appui contre la paroi arrière 1b du boîtier de projecteur assurant, en association avec le joint 16, une étanchéité optimale.

On comprend que le correcteur interne 12 de l'invention est mis en place, par l'opérateur, depuis l'intérieur du boîtier externe, c'est-à-dire depuis la face avant du projecteur qui, ensuite, sera fermée au moyen de la glace de protection. L'installation du correcteur 12 est obtenue en introduisant le correcteur 12 dans le boîtier externe jusqu'à ce que son élément 14 à baïonnette soit introduit dans l'orifice 1a du boîtier externe ; un mouvement de rotation du correcteur 12 permet ensuite de le bloquer, par l'intermédiaire des ergots 15, contre la paroi arrière 1b du boîtier externe.

Le correcteur est mis en place par l'avant du projecteur. Il est connecté à l'intérieur du boîtier du projecteur ce qui permet d'utiliser le faisceau électrique qui alimente l'ensemble des dispositifs à l'intérieur du projecteur, sans passer par un faisceau électrique du véhicule relié spécifiquement et exclusivement au correcteur.

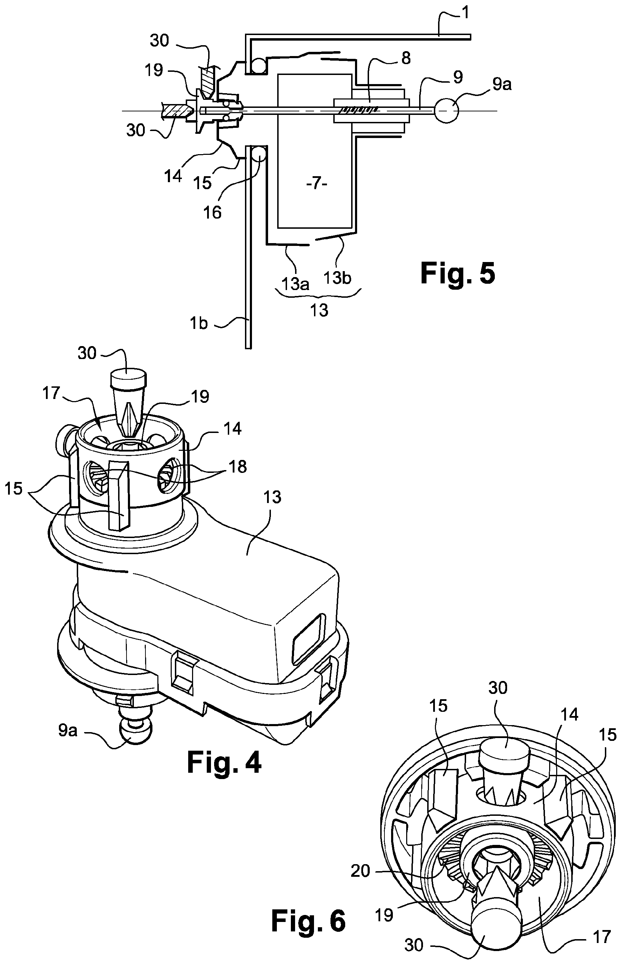

Un correcteur interne de l'invention est représenté sur les figures 4 à 6. Le correcteur intègre un système de réglage manuel, par exemple par le garagiste ou par l'opérateur de montage du véhicule. Il est ainsi possible d'agir directement, de façon mécanique, sur la tige longitudinale 9.

Dans l'invention, le système de réglage manuel est réalisé au moyen d'une roue dentée 19 installée à l'intérieur de l'élément 14 à baïonnette. Dans ce mode de réalisation, l'élément 14 à baïonnette a sensiblement une forme de bague dont un des côtés constitue une ouverture centrale 17. La surface extérieure de la bague comporte des ergots 15 tels que décrits précédemment. Une roue dentée 19 est insérée dans l'ouverture 17 de l'élément 14 à baïonnette. Cette roue dentée 19 forme une sorte d'écrou équipé sur son contour de dents 20 et est fixée à l'intérieur de l'élément 14 à baïonnette, par exemple par clippage. Cette roue dentée 19 reprend la tige longitudinale 9. Pour cela, la tige longitudinale 9 est prolongée dans le boîtier de correcteur 13 jusqu'à l'élément à baïonnette 14 pour être fixée sur la roue dentée 19.

Ainsi, par un mouvement de rotation manuel de la roue dentée, on fait subir un mouvement de rotation à la tige, ce mouvement de rotation étant transformé en un mouvement hélicoïdal par l'ensemble mécanique 8. On comprend donc que la tige longitudinale 9 peut être entraînée soit électriquement par l'unité électrique 7, soit mécaniquement par la roue dentée. La roue dentée est entraînée en rotation au moyen d'un outil spécifique, comme expliqué ultérieurement.

En outre, dans ce mode de réalisation, la fonction de correction par module électrique et la fonction de correction par réglage manuel sont regroupées dans le correcteur interne et obtenues au moyen d'une seule et même tige longitudinale.

Selon l'invention, l'élément à baïonnette 14 comporte au moins deux ergots 14 qui constituent des surfaces d'appui contre la paroi arrière 1a du boîtier externe 1 assurant, avec le joint 16, l'étanchéité du boîtier de projecteur. Dans le mode de réalisation montré sur les figures 4 et 6, l'élément à baïonnette 14 est équipé de quatre ergots 15. Ces quatre ergots 15 constituent quatre surfaces d'appui ce qui améliore encore l'étanchéité de l'ensemble. Par ailleurs, dans un mode de réalisation de l'invention, l'élément à baïonnette 14 comporte plusieurs orifices latéraux 18 répartis sur sa circonférence. Il peut comporter, par exemple, un orifice latéral 18 entre chaque ensemble de deux ergots 15. Chacun de ces orifices latéraux 18 permet, à l'opérateur, d'introduire un outil de réglage 30 à l'intérieur de l'élément à baïonnette 14. L'utilisation de cet outil 30 a pour objectif de faire tourner la roue dentée 19, entraînant une rotation de la tige longitudinale 9. Chaque orifice latéral 18 permet à l'utilisateur d'accéder à la roue dentée par l'intermédiaire de ses dents 20. La pluralité d'orifices latéraux 18 permet une introduction de l'outil 30 suivant différentes positions, à l'intérieur de l'élément à baïonnette 14. On comprend donc que, de cette façon, l'opérateur peut accéder à la roue dentée depuis plusieurs positions latérales.

L'outil 30 peut également accéder à la roue dentée depuis l'ouverture 17 de l'élément à baïonnette 14, comme montré sur la figure 4. Dans ce cas, l'opérateur agit sur la roue dentée via sa forme centrale en écrou.

Le correcteur interne, dans ce mode de réalisation de l'invention, offre un accès direct à l'outil de réglage, c'est-à-dire un accès sans rappel d'angle, ce qui simplifie l'utilisation de l'outil de réglage par l'opérateur.

En outre, ce correcteur interne est un correcteur multi-accès. Un tel correcteur multi-accès présente l'avantage de pouvoir être installé de différentes façons à l'intérieur du boîtier de projecteur tout en offrant un accès à l'outil de réglage. Le fait de pouvoir placer différemment le correcteur interne à l'intérieur du boîtier du projecteur peut permettre de gagner de l'espace dans le boîtier de correcteur et donc de diminuer l'encombrement du projecteur.

De plus, dans ce mode de réalisation, les moyens de réglage manuel multi-accès sont implantés dans l'encombrement du correcteur électrique. L'installation de ces moyens est donc effectuée simultanément avec l'installation du correcteur électrique. Elle ne nécessite aucun moyen ni aucune intervention supplémentaire. Les moyens de réglage manuel étant contenus dans le correcteur électrique, il n'y a donc aucune interférence du réglage manuel avec le boîtier externe.

## Revendications

1. Correcteur d'éclairage interne (12) pour dispositif d'éclairage et/ou de signalisation de véhicule automobile, comportant un système de réglage manuel et un boîtier de correcteur (13) comprenant :
- une tige longitudinale (9) ayant une première extrémité (9a) externe audit boîtier de correcteur, agencée sur une face avant (13b) dudit boîtier de correcteur, et
- un module électromécanique (8) apte à déplacer ladite tige, ledit correcteur comporte un élément (14) de fixation agencé sur une face arrière du boîtier de correcteur (13), ledit élément de fixation étant un élément à baïonnette destiné à être situé à l'extérieur du boîtier externe (1) dudit dispositif d'éclairage et/ou de signalisation, ledit élément (14) de fixation comportant une paroi cylindrique équipée, sur sa face externe, d'au moins deux ergots de blocage (15), **caractérisé en ce que** ledit élément (14) de fixation intégre une roue dentée (19) du système de réglage manuel reliée mécaniquement à la tige longitudinale (9) afin d'entraîner ladite tige en rotation.

2. Correcteur selon la revendication 1,
**caractérisé en ce que** la roue dentée (19) est clippée dans l'élément de fixation.

3. Correcteur selon la revendication 1 ou 2,
**caractérisé en ce que** l'élément (14) de fixation comporte une paroi cylindrique munie d'au moins un orifice latéral (18) d'accès à la roue dentée.

4. Correcteur selon l'une quelconque des revendications 1 à 3, **caractérisé en ce que** l'élément de fixation a une forme de bague dont une ouverture centrale (17) constitue un accès à la roue dentée.

5. Correcteur selon l'une quelconque des revendications précédentes, **caractérisé en ce que** ledit dispositif électromécanique (8) est apte à déplacer la tige longitudinale (9) au moins en translation.

6. Dispositif d'éclairage et/ou de signalisation pour véhicule automobile, comportant :
- un boîtier externe (1) fermé par une glace de protection (2),
- une unité d'éclairage (5), agencée à l'intérieur dudit boîtier externe, face à la glace de protection, pour produire un faisceau d'éclairage, et
- un correcteur d'éclairage, situe à l'intérieur dudit boîtier externe (1), apte à faire pivoter l'unité d'éclairage (5) pour modifier l'orientation du faisceau d'éclairage,
**caractérisé en ce que** le correcteur d'éclairage interne (12) est conforme à l'une quelconque des revendications précédentes.

7. Dispositif d'éclairage et/ou de signalisation selon la revendication 6,
**caractérisé en ce que** l'élément (14) de fixation est situé à l'extérieur du boîtier externe (1) dudit dispositif d'éclairage et/ou de signalisation.

8. Dispositif d'éclairage et/ou de signalisation selon la revendication 6 ou 7,
**caractérisé en ce que** le boîtier externe (1) dudit dispositif d'éclairage et/ou de signalisation comporte, sur une face opposée à la glace de protection, une ouverture (1a) de forme adaptée à la forme de l'élément (14) de fixation, ledit élément de fixation étant monté au travers de cette ouverture.

9. Dispositif d'éclairage et/ou de signalisation selon la revendication 8,
**caractérisé en ce qu'**il comporte un joint d'étanchéité (16) placé entre le boîtier de correcteur (13) et le boîtier externe du dispositif d'éclairage et/ou de signalisation, autour de l'ouverture (1a) dudit boîtier externe (13).

## Patentansprüche

1. Interner Beleuchtungskorrektor (12) für eine Beleuchtungs- und/oder Signalisierungsvorrichtung eines Kraftfahrzeugs, ein manuelles Einstellsystem und ein Korrektor Gehäuse (13) beinhaltend, Folgendes umfassend:
- einen Längsstab (9), der ein erstes Ende (9a) aufweist, das außerhalb des Korrektor Gehäuses liegt, und der auf einer Vorderseite (13b) des Korrektor Gehäuses angeordnet ist, und
- ein elektromechanisches Modul (8), das imstande ist, den Stab zu bewegen,
wobei der Korrektor ein Befestigungselement (14) beinhaltet, das auf einer Rückseite des Korrektor Gehäuses (13) angeordnet ist, wobei das Befestigungselement ein Bajonettelement ist, das dazu bestimmt ist, sich außerhalb des externen Gehäuses (1) der Beleuchtungs- und/oder Signalisierungsvorrichtung zu befinden, wobei das Befestigungselement (14) eine zylindrische Wand beinhaltet, die auf ihrer Außenseite mit mindestens zwei Blockierzapfen (15) ausgestattet ist, **dadurch gekennzeichnet, dass** das Befestigungselement (14) ein Zahnrad (19) des manuellen Einstellsystems einschließt, das mit dem Längsstab (9) mechanisch verbunden ist, um den Stab in Drehung zu versetzen.

2. Korrektor nach Anspruch 1, **dadurch gekennzeichnet, dass** das Zahnrad (19) in das Befestigungselement geklipst ist.

3. Korrektor nach Anspruch 1 oder 2, **dadurch gekennzeichnet, dass** das Befestigungselement (14) eine zylindrische Wand beinhaltet, die mit mindestens einem seitlichen Zugangsloch (18) zu dem Zahnrad versehen ist.

4. Korrektor nach einem der Ansprüche 1 bis 3, **dadurch gekennzeichnet, dass** das Befestigungselement eine Ringform aufweist, von der eine mittlere Öffnung (17) einen Zugang zu dem Zahnrad bildet.

5. Korrektor nach einem der vorstehenden Ansprüche, **dadurch gekennzeichnet, dass** die elektromechanische Vorrichtung (8) imstande ist, den Längsstab (9) mindestens translatorisch zu bewegen.

6. Beleuchtungs- und/oder Signalisierungsvorrichtung für ein Kraftfahrzeug, Folgendes beinhaltend:
- ein externes Gehäuse (1), das von einer Schutzscheibe (2) verschlossen wird,
- eine Beleuchtungseinheit (5), die innerhalb des externen Gehäuses, gegenüber der Schutzscheibe, angeordnet ist, um einen Beleuchtungsstrahl zu erzeugen, und
- einen Beleuchtungskorrektor, der sich innerhalb des externen Gehäuses (1) befindet und imstande ist, die Beleuchtungseinheit (5) schwenken zu lassen, um die Ausrichtung des Beleuchtungsstrahls zu ändern,
**dadurch gekennzeichnet, dass** der interne Beleuchtungskorrektor (12) einem der vorstehenden Ansprüche entspricht.

7. Beleuchtungs- und/oder Signalisierungsvorrichtung nach Anspruch 6, **dadurch gekennzeichnet, dass** sich das Befestigungselement (14) außerhalb des externen Gehäuses (1) der Beleuchtungs- und/oder Signalisierungsvorrichtung befindet.

8. Beleuchtungs- und/oder Signalisierungsvorrichtung nach Anspruch 6 oder 7, **dadurch gekennzeichnet, dass** das externe Gehäuse (1) der Beleuchtungs- und/oder Signalisierungsvorrichtung auf einer der Schutzscheibe gegenüberliegenden Seite eine Öffnung (1a) mit einer Form beinhaltet, die an die Form des Befestigungselements (14) angepasst ist, wobei das Befestigungselement durch diese Öffnung hindurch angebracht wird.

9. Beleuchtungs- und/oder Signalisierungsvorrichtung nach Anspruch 8, **dadurch gekennzeichnet, dass** sie eine Dichtung (16) beinhaltet, die zwischen dem Korrektor Gehäuse (13) und dem externen Gehäuse der Beleuchtungs- und/oder Signalisierungsvorrichtung rund um die Öffnung (1a) des externen Gehäuses (13) platziert ist.

## Claims

1. Inner lighting corrector (12) for motor vehicle lighting and/or signalling device, comprising a manual adjustment system, a corrector housing (13) comprising:
- a longitudinal rod (9) having a first end (9a) outside said corrector casing, arranged on a front face (13b) of said corrector housing, and
- an electromechanical module (8) capable of moving said rod,
said corrector comprises a fastening element (14) arranged on a rear face of the corrector housing (13), said fastening element being a bayonet element intended to be located outside of the outer housing (1) of said lighting and/or signalling device, said fastening element (14) comprising a cylindrical wall equipped, on the outer face thereof, with at least two locking lugs (15), **characterised in that** said fastening element (14) includes a sprocket (19) of the manual adjustment system mechanically connected to the longitudinal rod (9) in order to drive said rod in rotation.

2. Corrector according to claim 1, **characterised in that** the sprocket (19) is clipped in the fastening element.

3. Corrector according to claim 1 or 2, **characterised in that** the fastening element (14) comprises a cylindrical wall equipped with at least one side orifice (18) for accessing the sprocket.

4. Corrector according to any one of claims 1 to 3, **characterised in that** the fastening element has a ring shape of which a central opening (17) provides access to the sprocket.

5. Corrector according to any one of the preceding claims, **characterised in that** said electromechanical device (8) is capable of moving the longitudinal rod (9) at least in translation.

6. Lighting and/or signalling device for a motor vehicle, comprising:
- an outer housing (1) closed by a protective glass (2),
- an lighting unit (5), arranged inside said outer housing, facing the protective glass, to produce an lighting beam, and
- an lighting corrector, located inside said outer housing (1), capable of making the lighting unit (5) pivot to modify the orientation of the lighting beam, **characterised in that** the inner lighting corrector (12) conforms with any one of the preceding claims.

7. Lighting and/or signalling device according to claim 6, **characterised in that** the fastening element (14) is located outside of the outer housing (1) of said lighting and/or signalling device.

8. Lighting and/or signalling device according to claim 6 or 7, **characterised in that** the outer housing (1) of said lighting and/or signalling device comprises, on a face opposite the protective glass, an opening (1a) with a shape adapted to the shape of the fastening element (14), said fastening element being mounted through this opening.

9. Lighting and/or signalling device according to claim 8, **characterised in that** it comprises a seal (16) placed between the corrector housing (13) and the outer housing of the lighting and/or signalling device, around the opening (1a) of said outer housing (13).
